# EUROPEAN PATENT SPECIFICATION

(11) **EP 1 560 456 B1**
(45) Date of publication and mention of the grant of the patent: **30.05.2007**
(21) Application number: 05250066.7
(22) Date of filing: 07.01.2005
(51) Int. Cl.: H04Q 7/38

(54) **Mobile communication device call barge-in**
Anrufsunterbrechnung für ein mobiles Telekommunikationsendgerät
Interruption d'appel pour un terminal de télécommunication mobile

(30) Priority: 29.01.2004 US 767446
(43) Date of publication of application: 03.08.2005
(73) Proprietor: LUCENT TECHNOLOGIES INC., Murray Hill, New Jersey 07974-0636 (US)
(72) Inventor: Barclay, Deborah L., Winfield Illinois 60190 (US); Banco, David S., Winfield Illinois 60190 (US); Mahajan, Sanjeev, Naperville Illinois 60565-9201 (US); McRoberts, Thomas L., Naperville Illinois 60540-4922 (US); Ruggerio, Raymond L., Glenview Illinois 60025 (US)
(74) Representative: Sarup, David Alexander

(56) References cited:
- EP-A- 1 322 131
- WO-A-95/05721
- US-A- 5 666 364
- US-A1- 2002 131 397

## Description

### TECHNICAL FIELD

The invention relates generally to wireless communication networks, and more particularly to priority incoming calls to users of mobile communication devices.

### BACKGROUND

As mobile phone service costs have declined, more people use their mobile phone as a primary means of communication. Many people who use their mobile phone as a primary means of communication tend to heavily use their mobile phones. A priority user, for example, an emergency worker or family member, may have difficulty placing a priority call to such a target user who heavily uses a mobile phone as a primary means of communication. If the target user is engaged in a preexisting active call, the priority user may not be able to contact the target user. The priority user may receive a busy signal or voicemail prompt if the target user is not easily accessible. The target user may not be easily accessible because, for example, the target user does not answer the priority call on call waiting, does not have call waiting, or is currently using all of the lines available to the target user. To reach the target user, the priority user must call the target user back at a later time or leave a message.

Patel et al. (U.S. Patent App. No. 2002/0131397) discloses an approach in which a wireless device is able to receive broadcast data over a payload channel established in another network and establishing payload channels directly with the wireless device when high bandwidth data exchanges are needed, and in times of emergency enabling barge-in functionality controlled by the management network. Pierce et al. (U.S. Patent No. 5,666,364) discloses a central busy list for coordinating the receipt of incoming calls to a subscriber subscribing to the calling services of separate first and second communication networks. Olson (European Patent App. EP 1 322 131) discloses a method of including a further telecommunications device in an existing call between a number of telecommunications devices already connected to each other through a telecommunications network, a signal requesting the further telecommunications device to be included is transmitted via short-range communications link from one of the devices.

Therefore, a need exists for an increase in accessibility by a priority user to a target user of a mobile phone engaged in a preexisting active call.

### SUMMARY

The invention in one implementation encompasses an apparatus. The apparatus comprises a mobile switching center that performs a barge-in that allows a first user to communicate with a second user of a mobile communication device that is engaged in a preexisting active call. The preexisting active call comprises a preexisting active call between the mobile communication device and one or more additional communication devices. The mobile switching component communicates one or more indications of the barge-in to the one or more additional communication devices.

Another implementation of the invention encompasses a method. A barge-in is performed that allows a first user to communicate with a second user of a mobile communication device that is engaged in a preexisting active call. The preexisting active call comprises a preexisting active call between the mobile communication device and one or more additional communication devices. One or more indications of the barge-in are communicated to the one or more additional communication devices.

### DESCRIPTION OF THE DRAWINGS

Features of exemplary implementations of the invention will become apparent from the description, the claims, and the accompanying drawings in which:
FIG. 1 is a representation of one implementation of an apparatus that comprises a mobile switching component, a priority communication device, a mobile communication device, one or more additional communication devices, a home location register, and a visitor location register, and illustrates the mobile communication device and one or more additional communication devices engaged in a preexisting active call.
FIG. 2 is similar to FIG. 1 and illustrates a call leg of the priority communication device bridged with the preexisting active call.
FIG. 3 is similar to FIG. 2 and illustrates a call leg of the one or more additional communication devices placed on hold.
FIG. 4 is similar to FIG. 1 and illustrates the priority communication device acting on behalf of an additional communication device.
FIG. 5 is an exemplary partial message flow of the implementation of the apparatus of FIG. 1 that illustrates the mobile switching center performing a barge-in.

### DETAILED DESCRIPTION

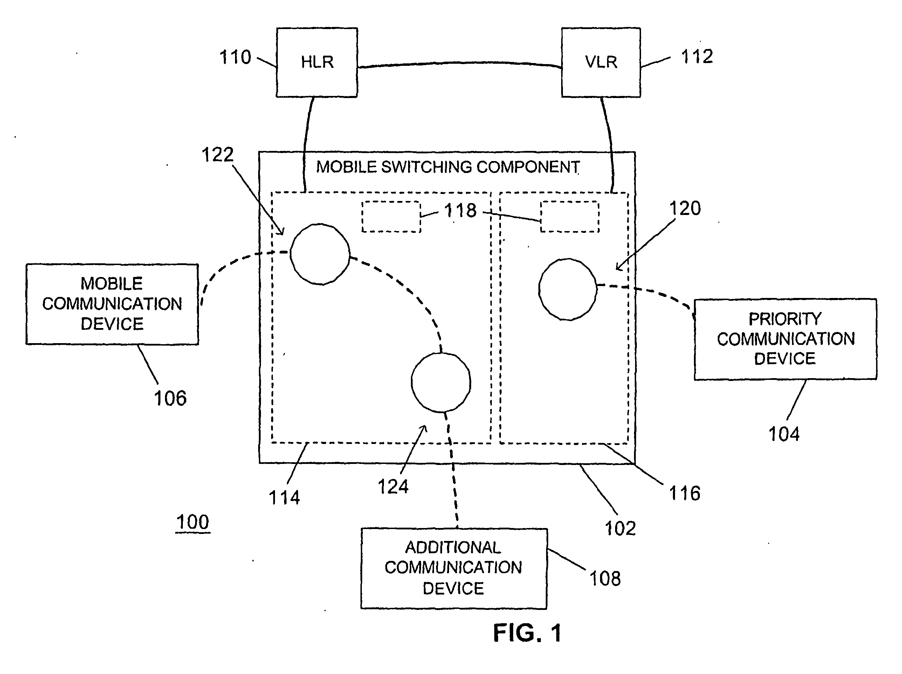

Turning to FIG. 1, an apparatus 100 in one example comprises a mobile switching component 102, a priority communication device 104, a mobile communication device 106, one or more additional communication devices 108, a home location register 110, and one or more visitor location registers 112. The mobile switching component 102 synchronizes with the mobile communication device 106. For example, the mobile switching component 102 routes calls to and from the mobile communication device 106. The mobile switching component 102 in one example comprises a home mobile switching center ("MSC-H") 114 and one or more visited mobile switching centers ("MSC-V") 116 that cooperate to route calls to and from the mobile communication device 106, as will be appreciated by those skilled in the art. The home mobile switching center 114 and visited mobile switching center 116 in one example comprise an instance of a recordable data storage medium 118, as described herein. The mobile switching component 102 bridges and/or disconnects call legs of the priority communication device 104, call legs of the mobile communication device 106, and/or call legs of the additional communication devices 108, as described herein.

The priority communication device 104 in one example comprises an operator terminal, emergency worker terminal, or priority user terminal. A priority user of the priority communication device 104, for example, an operator, emergency worker, or family member, employs the priority communication device 104 to communicate with a target user of the mobile communication device 106. The priority communication device 104 cooperates with the mobile switching component 102 to allow the priority user to communicate with the target user. For example, the priority communication device 104 comprises a call leg 120 to the mobile switching component 102. The mobile switching component 102 bridges and/or disconnects the call leg 120 with other call legs, as described herein.

The priority communication device 104 in one example sends an authorization code to the mobile switching component 102. The mobile switching component 102 performs a barge-in to allow the priority user to communicate with the target user through employment of the authorization code. For example, the mobile switching component 102 performs the barge-in upon receiving and/or verifying the authorization code. In one example, the authorization code comprises one or more integrated services digital network user part ("ISUP") messages, for example, an initial address message ("IAM"). The initial address message in one example comprises an operator services information parameter, for example, a special handling type. The mobile switching component 102 employs the operator services information parameter to perform the barge-in. In another example, the authorization code comprises a dialed number. For example, the mobile switching component 102 employs a priority number dialed by the priority user to perform the barge-in. The priority number may be dialed during a voicemail prompt or busy signal. In another example, the authorization code comprises a calling party category, such as the ISUP *calling party category* parameter. The mobile switch component 102 employs a list of ISUP calling party categories designated as priority users that are provided barge-in privileges. In yet another example, the mobile switching component 102 employs a list of priority users designated by the target user to determine that the incoming call is from a priority user. The mobile switching component 102 compares an identifier of the priority user, for example, a calling party number, with the list of priority users to determine that the incoming call is from a priority user.

The mobile communication device 106 in one example comprises a mobile phone and/or personal digital assistant. The target user employs the mobile communication device 106 to send and receive phone calls and/or data. The mobile communication device 106 cooperates with the mobile switching component 102 to allow the target user to communicate with the priority user and/or additional users of the additional communication devices 108. For example, the mobile communication device 106 comprises a call leg 122 to the mobile switching component 102. The mobile switching component 102 bridges and/or disconnects the call leg 122 with other call legs, as described herein.

The mobile communication device 106 in one example communicates one or more in-band and/or out-of-band indications to the target user, as described herein. Exemplary in-band indications comprise indications sent to the mobile communication device 106 over a voice channel, for example, background noise and audio tones. Exemplary out-of-band indications comprise indications sent to the mobile communication device 106 over a data channel, for example, a vibration request or flashing of the mobile communication device 106.

The mobile communication device 106 and the mobile switching component 102 in one example cooperate to provide a user interface to the target user. The user interface allows the target user to input one or more designations of priority users that may initiate a barge-in. For example, the target user employs the user interface to designate family members and close friends as priority users. In a further example, the mobile switching component 102 comprises a list of additional priority users, for example, operators and emergency personnel, for target users of the mobile communication device 106. Upon receiving an incoming call for the target user of the mobile communication device 106, the mobile switching component 102 determines if the incoming call is from a priority user.

The additional communication devices 108 in one example comprise public switched telephone network ("PSTN") terminals, internet protocol ("IP") telephony devices, and/or other mobile communication devices. The additional communication device 108 cooperates with the mobile switching component 102 to allow the additional user of the additional communication device 108 to communicate with the target user. For example, the additional communication device 108 comprises a call leg 124 to the mobile switching component 102. The mobile switching component 102 bridges and/or disconnects the call leg 124 with other call legs, as described herein.

The home location register 110 and the visitor location registers 112 cooperate to determine a call path for the mobile communication device 106. As the mobile communication device 106 moves through areas of coverage of different mobile switching centers, for example, the home mobile switching center 114 and visited mobile switching centers 116, the mobile switching centers hand off synchronization with the mobile communication device 106. The mobile switching component 102 maintains an identifier of the mobile communication device 106. The identifier in one example comprises a mobile station ID, for example, a mobile identifier number ("MIN"), an international mobile subscriber identity ("IMSI"), or an international roaming mobile identifier number ("IRM"). In one example where the mobile communication device 106 is synchronized with the home mobile switching center 114, the home location register 110 determines a temporary local directory number ("TLDN") for the mobile communication device 106 through employment of the identifier. In another example where the mobile communication device 106 is synchronized with a visited mobile switching center 116, the home location register 110, the visitor location register 112, and the visited mobile switching center 116 cooperate to determine the TLDN for the mobile communication device 106 through employment of the identifier, as will be appreciated by those skilled in the art.

An illustrative description of exemplary operation of the apparatus 100 is presented, for explanatory purposes. Referring to FIG. 1, a target user of a mobile communication device 106 is engaged in a preexisting active call with one or more additional users of the additional devices 108. The mobile switching component 102 serves the mobile communication device 106. For example, the mobile switching component 102 bridges a call leg 122 of the mobile communication device 106 with one or more call legs 124 of the additional communication devices 108 for the preexisting active call.

A priority user of the priority communication device 104 attempts to place a call, for example, an incoming call over a call leg 120, to the target user of the mobile communication device 106. The mobile switching component 102 employs an authorization code to determine that the incoming call is from a priority user. Other means for indicating that the incoming call is from a priority user will be apparent to those skilled in the art.

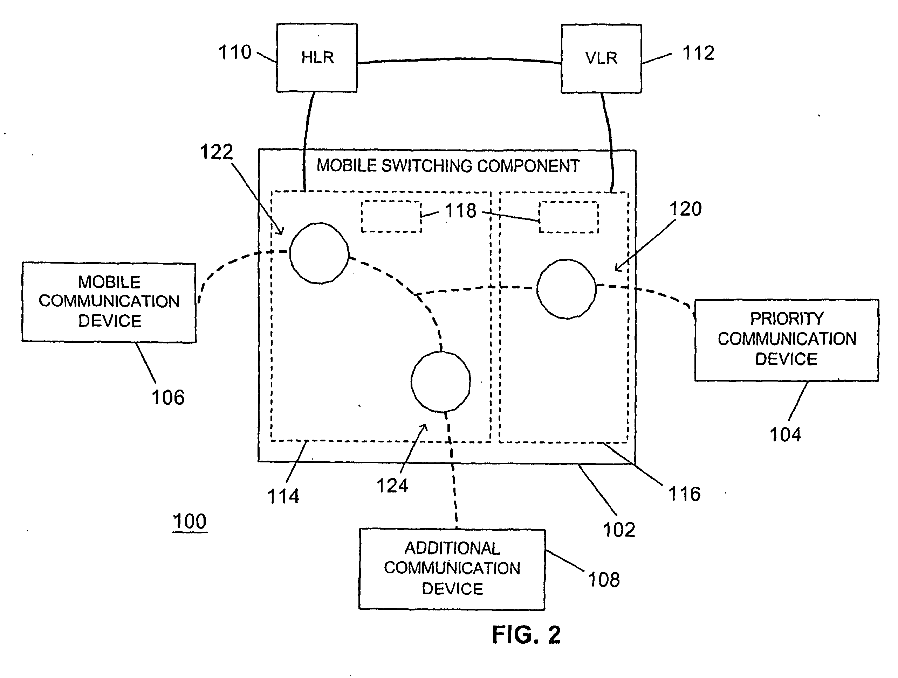

Turning to FIG. 2, upon determining that the incoming call is from a priority user, the mobile switching component 102 in one example performs a barge-in to allow the priority user to communicate with the target user. For example, the mobile switching component 102 bridges the call leg 120 of the priority communication device 104 with the call legs 122 and 124 of the mobile communication device 106 and additional communication device 108. The priority user of the priority communication device 104 can then communicate with the target user of the mobile communication device 106. The mobile switching component 102 in one example allows the priority user, the target user, and the additional users to communicate with one another.

The mobile switching component 102 in one example communicates one or more indications of the barge-in to the target user of the mobile communication device 106. In a further example, the mobile switching component 102 cooperates with the mobile communication device 106 to communicate the indications to the target user. In another example, the mobile switching component 102 communicates one or more indications to the target user as well as the one or more additional users. The indications in one example comprise an entry indication and an exit indication. For example, the mobile switching component 102 communicates the entry indication upon a start of the barge-in, and communicates the exit indication upon an end of the barge-in. In another example, the indications comprise a background tone. For example, the mobile switching component 102 cooperates with the mobile communication device 106 to play the background tone for a duration of the barge-in. In yet another example, the indications comprise intermittent indications. For example, the mobile switching component 102 communicates the intermittent indications at pre-determined intervals for the duration of the barge-in.

The indications in one example comprise one or more in-band indications and/or one or more out-of-band indications. Exemplary in-band indications comprise audio indications, for example, the background tone played for the duration of the barge-in. Exemplary out-of-band indications comprise vibrations and/or flashing lights of the mobile communication device 106. The mobile switching component 102 in one example employs blank-and-burst signaling to communicate the out-of-band indications to the mobile communication device 106 and/or the additional communication devices 108.

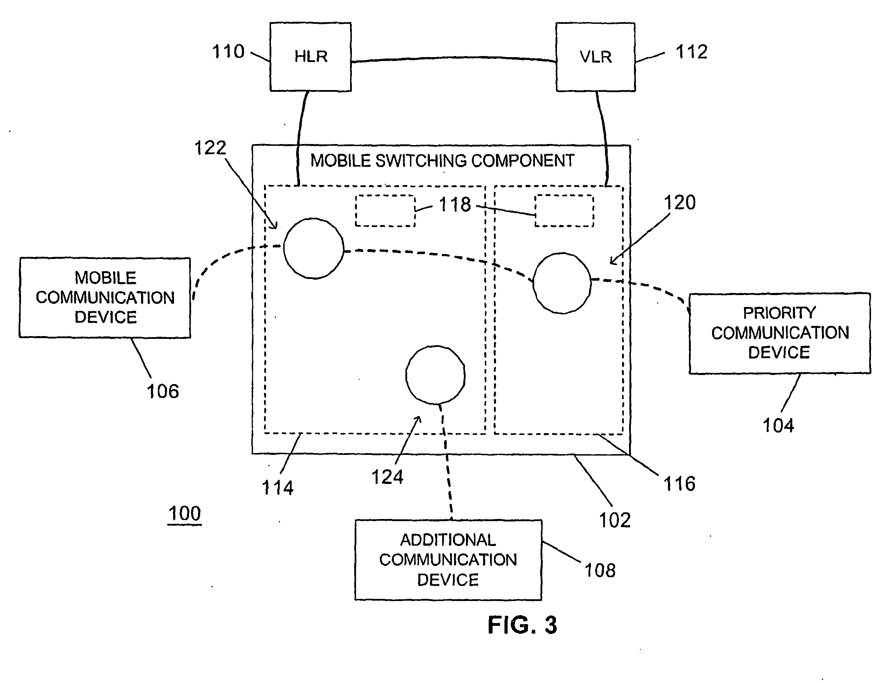

Turning to FIG. 3, in another example, the mobile switching component 102 bridges the call leg 120 of the priority communication device 104 with the call leg 122 of the mobile communication device 106 and places one or more of the additional communication device 108 on hold for the duration of the barge-in. For example, the mobile switching component 102 temporarily disconnects the call legs 124 of the additional communication devices 108 from the call leg 122 of the mobile communication device 106 for the duration of the barge-in. The mobile switching component 102 in one example communicates one or more indications of the barge-in to the additional communication devices 108. Where the preexisting active call comprises a conference call between the mobile communication device 106 and a plurality of additional communication devices 108, the plurality of additional communication devices 108 in one example can still communicate with one another while disconnected from the mobile communication device 106.

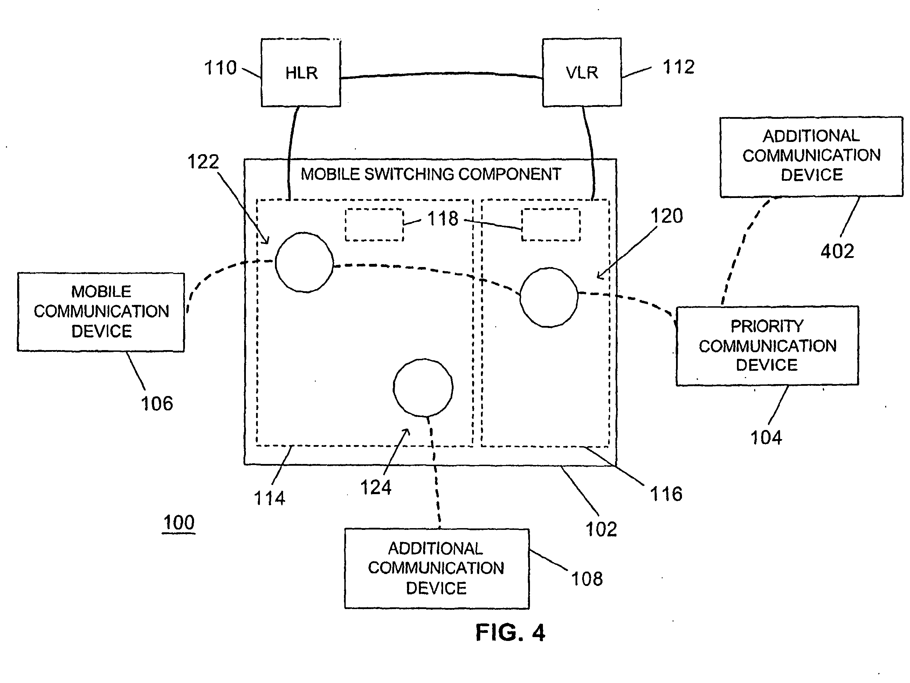

Turning to FIG. 4, the apparatus 100 in one example further comprises an additional communication device 402. The priority user of the priority communication device 104 in one example acts on behalf of a user of the additional communication device 402. For example, the user of the additional communication device 402 attempts to place an incoming call to the target user of the mobile communication device 106. The target user does not answer the incoming call, and the user of the additional communication device 402 places a secondary call to the priority user of the priority communication device 104, for example, an operator. The operator of the priority communication device 104 sends a request for a barge-in to the mobile switching component 102. During the barge-in, the priority user of the priority communication device 104 alerts the target user of the incoming call from the user of the additional communication device 402. In one example, the target user disconnects from the preexisting active call and receives the incoming call from the user of the additional communication device 402. In another example, the operator of the priority communication device 104 initiates a bridge between the secondary call and the call leg 120. The user of the additional communication device 402 can then communicate with the target user of the mobile communication device 106.

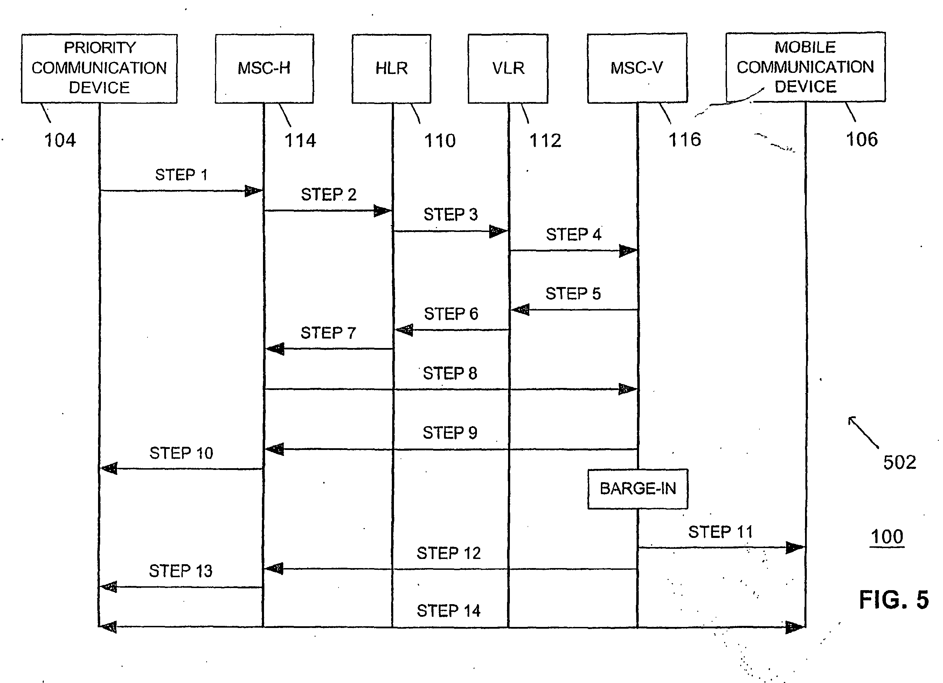

Turning to FIG. 5, a message flow 502 in one example comprises an exemplary barge-in. The home mobile switching center 114 and the visited mobile switching center 116 cooperate to route calls to and from the mobile communication device 106. The home mobile switching center 114 receives call requests for the mobile communication device 106. The visited mobile switching center 116 synchronizes with the mobile communication device 106. The home mobile switching center 114 routes calls for the mobile communication device 106 through the visited mobile switching center 116, as will be appreciated by those skilled in the art.

The home mobile switching center 114 receives a call request (STEP 1), for example, an initial address message ("IAM"), for a priority call from the priority communication device 104. The IAM message comprises a called party number equal to a mobile directory number ("MDN") of the mobile communication device 106. The IAM message further comprises an operator services information parameter that indicates that the user of the priority communication device 104 is a priority user.

The home mobile switching center 114 determines a mobile identification number ("MIN") of the mobile communication device 106. The home mobile switching center 114 identifies the visited mobile switching center 116 through employment of the home location register 110. For example, the home mobile switching center 114 employs the MIN to request a location of and/or route to the mobile communication device 106 from the home location register 110 (STEP 2). The home location register 110 contacts the visitor location register 112 that the mobile communication device 106 was last registered with to request the route to the mobile communication device 106 (STEP 3). The visitor location register 112 requests a temporary local directory number ("TLDN") for the mobile communication device 106 from the visited mobile switching center 116 (STEP 4). The visited mobile switching center 116 determines the TLDN for the mobile communication device 106 and sends the TLDN to the visitor location register 112. The visitor location register 112 returns the TLDN to the home location register 110 (STEP 6). The home location register 110 returns the TLDN to the home mobile switching center 114 (STEP 7), as will be appreciated by those skilled in the art.

The home mobile switching center 114 sends a call request, for example, an IAM, to the visited mobile switching center 116 (STEP 8). The IAM comprises the TLDN and the operator services information parameter. The visited mobile switching center 116 confirms receipt of the call request to the home mobile switching center 114 and the priority communication device 104 (STEPS 9 and 10). For example, the visited mobile switching center 116 sends an address complete message ("ACM") to the home mobile switching center 114, and the home mobile switching center 114 forwards the ACM to the priority communication device 104, as will be appreciated by those skilled in the art.

The visited mobile switching center 116 performs a barge-in to allow the priority user of the priority communication device 104 to communicate with the target user of the mobile communication device 106 (STEP 11). For example, the visited mobile switching center 116 bridges the call leg 120 (FIGS 1-4) and the call leg 122 (FIGS. 1-4) to connect the priority call. The visited mobile switching center 116 in one example sends a flash signal to the mobile communication device 106 to indicate the barge-in to the target user.

Upon bridging the call legs 120 and 122, the visited mobile switching center 116 sends a confirmation of the bridge to the home mobile switching center 114 (STEP 12). The home mobile switching center 114 sends a confirmation of the bridge to the priority communication device 104 (STEP 13). When communication between the target user and the priority user is finished, the visited mobile switching center 116 releases the priority call (STEP 14).

In another example, the mobile communication device 106 is synchronized with the home mobile switching center 114. The home location register 110 determines the TLDN for the mobile communication device 106, so STEPS 3-6 are omitted. The home mobile switching center 114 communicates with the mobile communication device 106 directly instead of routing through the visited mobile switching center 116, so STEPS 8, 9, and 12 are omitted, and STEP 11 is performed by the home mobile switching center 114, as will be appreciated by those skilled in the art.

The apparatus 100 in one example comprises a plurality of components such as one or more of electronic components, hardware components, and computer software components. A number of such components can be combined or divided in the apparatus 100. An exemplary component of the apparatus 100 employs and/or comprises a set and/or series of computer instructions written in or implemented with any of a number of programming languages, as will be appreciated by those skilled in the art.

The apparatus 100 in one example employs one or more computer-readable signal-bearing media. Examples of a computer-readable signal-bearing medium for the apparatus 100 comprise the recordable data storage mediums 118 of the home mobile switching center 114 and the visited mobile switching center 116. For example, the computer-readable signal-bearing medium for the apparatus 100 comprises one or more of a magnetic, electrical, optical, biological, and atomic data storage medium. In one example, the computer-readable signal-bearing medium comprises a modulated carrier signal transmitted over a network comprising or coupled with the apparatus 100, for instance, one or more of a telephone network, a local area network ("LAN"), the internet, and a wireless network.

The steps or operations described herein are just exemplary. There may be many variations to these steps or operations. For instance, the steps may be performed in a differing order, or steps may be added, deleted, or modified.

## Claims

1. An apparatus (100) comprising a mobile switching center (102) that routes calls to and/or from a mobile communication device (106),
wherein the mobile switching center (102) performs a barge-in that allows a first user to communicate with a second user of the mobile communication device (106) that is engaged in a preexisting active call, wherein the preexisting active call comprises a preexisting active call between the mobile communication device (106) and one or more additional communication devices;
**CHARACTERIZED IN THAT:**
wherein the mobile switching component (102) communicates one or more indications of the barge-in to the one or more additional communication devices.

2. The apparatus (100) of claim 1, wherein the mobile switching component (102) communicates one or more indications of the barge-in to the second user of the mobile communication device (106).

3. The apparatus (100) of claim 1, wherein the mobile switching component (102) performs the barge-in to allow the first user to participate in the preexisting active call between the mobile communication device (106) and the one or more additional communication devices.

4. The apparatus (100) of claim 1, wherein the mobile switching component (102) receives an authorization code from the first user;
wherein the mobile switching component (102) employs the authorization code from the first user to perform the barge-in.

5. The apparatus (100) of claim 1, wherein the mobile switching component (102) employs one or more priority user designations from the second user to perform a determination that the first user is a priority user;
wherein upon the determination that the first user is a priority user, the mobile switching component (102) performs the barge-in to allow the priority user to communicate with the second user.

6. The apparatus (100) of claim 1, wherein the mobile switching component (102) comprises a home mobile switching center (114) for the mobile communication device (106),
wherein the home mobile switching center (114) receives a request for the barge-in, the apparatus (100) further comprising:
a visited mobile switching center (116) for the mobile communication device (106);
wherein the home mobile switching center (114) identifies the visited mobile switching center (116) through employment of the home location register;
wherein the home mobile switching center (114) and the visited mobile switching center (116) cooperate to perform the barge-in to allow the first user to participate in the preexisting active call with the second user of the mobile communication device (106).

7. The apparatus of claim 1, wherein the mobile switching component receives an initial address message from the first user;
wherein the initial address message comprises an operator services information parameter as an indicator for a special handling type value;
wherein the mobile switching center employs the special handling type value to perform the barge-in.

8. A method of allowing a first user to communicate with a second user of a mobile communication device (106)comprising the step of:
performing a barge-in that allows the first user to communicate with the second user of the mobile communication device (106) that is engaged in a preexisting active call, wherein the preexisting active call comprises a preexisting active call between the mobile communication device (106) and one or more additional communication devices;
**CHARACTERIZED BY**:
communicating one or more indications of the barge-in to the one or more additional communication devices.

9. The method of claim 8, wherein the step of performing the barge-in that allows the first user to communicate with the second user of the mobile communication device (106) that is engaged in the preexisting active call comprises the steps of:
determining that the first user is a priority user; and
bridging a call leg (120) of the priority user with a call leg (122) of the second user.

10. The method of claim 9, further comprising the step of:
identifying a visited mobile switching center (116) that is synchronized with the mobile communication device (106) through employment of a home location register;
wherein the step of bridging the call leg (120) of the priority user with the call leg (122) of the second user comprises the step of:
cooperating with the visited mobile switching center (116) to bridge the call leg (120) of the priority user with the call leg (122) of the second user.

11. The method of claim 8, further comprising the step of:
communicating one or more indications of the barge-in to the mobile communication device (106).

12. The method of claim 8, wherein the step of determining that the first user is the priority user comprises the step of :
receiving an initial address message from the first user, wherein the initial address message comprises an operator services information parameter as an indicator for a special handling type value.

## Patentansprüche

1. Vorrichtung (100) mit einer Mobilvermittlungsstelle (102), die Verbindungen zu und/oder von einer mobilen Kommunikationsvorrichtung (106) leitet,
wobei die Mobilvermittlungsstelle (102) eine Aufschaltung durchführt, die einem ersten Benutzer erlaubt, mit einem zweiten Benutzer der mobilen Kommunikationsvorrichtung (106) zu kommunizieren, die an einer schon bestehenden aktiven Verbindung beteiligt ist, wobei die schon bestehende aktive Verbindung eine schon bestehende aktive Verbindung zwischen der mobilen Kommunikationsvorrichtung (106) und einer oder mehreren zusätzlichen Kommunikationsvorrichtungen umfaßt;
**dadurch gekennzeichnet, daß** die Mobilvermittlungskomponente (102) eine oder mehrere Anzeigen der Aufschaltung zu der einen oder den mehreren zusätzlichen Kommunikationsvorrichtungen übermittelt.

2. Vorrichtung (100) nach Anspruch 1, wobei die Mobilvermittlungskomponente (102) eine oder mehrere Anzeigen der Aufschaltung zum zweiten Benutzer der mobilen Kommunikationsvorrichtung (106) übermittelt.

3. Vorrichtung (100) nach Anspruch 1, wobei die Mobilvermittlungskomponente (102) die Aufschaltung durchführt, um dem ersten Benutzer zu erlauben, an der schon bestehenden aktiven Verbindung zwischen der mobilen Kommunikationsvorrichtung (106) und der einen oder den mehreren zusätzlichen Kommunikationsvorrichtungen teilzunehmen.

4. Vorrichtung (100) nach Anspruch 1, wobei die Mobilvermittlungskomponente (102) einen Berechtigungscode vom ersten Benutzer empfängt;
wobei die Mobilvermittlungskomponente (102) den Berechtigungscode vom ersten Benutzer zur Durchführung der Aufschaltung einsetzt.

5. Vorrichtung (100) nach Anspruch 1, wobei die Mobilvermittlungskomponente (102) eine oder mehrere Prioritäts-Benutzerbezeichnungen vom zweiten Benutzer einsetzt, um eine Bestimmung durchzuführen, daß der erste Benutzer ein Prioritätsbenutzer ist;
wobei bei der Bestimmung, daß der erste Benutzer ein Prioritätsbenutzer ist, die Mobilvermittlungskomponente (102) die Aufschaltung durchführt, um dem Prioritätsbenutzer zu erlauben mit dem zweiten Benutzer zu kommunizieren.

6. Vorrichtung (100) nach Anspruch 1, wobei die Mobilvermittlungskomponente (102) eine Heimat-Mobilvermittlungsstelle (114) für die mobile Kommunikationsvorrichtung (106) umfaßt, wobei die Heimat-Mobilvermittlungsstelle (114) eine Anforderung für die Aufschaltung empfängt, wobei die Vorrichtung (100) weiterhin folgendes umfaßt:
eine besuchte Mobilvermittlungsstelle (116) für die mobile Kommunikationsvorrichtung (106);
wobei die Heimat-Mobilvermittlungsstelle (114) die besuchte Mobilvermittlungsstelle (116) durch Einsatz des Heimatregisters identifiziert;
wobei die Heimat-Mobilvermittlungsstelle (114) und die besuchte Mobilvermittlungsstelle (116) zur Durchführung der Aufschaltung zusammenwirken, um dem ersten Benutzer die Teilnahme an der schon bestehenden aktiven Verbindung mit dem zweiten Benutzer der mobilen Kommunikationsvorrichtung (106) zu erlauben.

7. Vorrichtung nach Anspruch 1, wobei die Mobilvermittlungskomponente eine Erstadressennachricht vom ersten Benutzer empfängt;
wobei die Erstadressennachricht einen Handvermittlungsdienste-Informationsparameter als Anzeiger für einen besonderen Bearbeitungstypenwert umfaßt;
wobei die Mobilvermittlungsstelle den besonderen Bearbeitungstypenwert zur Durchführung der Aufschaltung einsetzt.

8. Verfahren zum Erlauben, daß ein erster Benutzer mit einem zweiten Benutzer einer mobilen Kommunikationsvorrichtung (106) kommuniziert, mit folgendem Schritt:
Durchführen einer Aufschaltung, die dem ersten Benutzer erlaubt, mit dem zweiten Benutzer der mobilen Kommunikationsvorrichtung (106) zu kommunizieren, die an einer schon bestehenden aktiven Verbindung beteiligt ist, wobei die schon bestehende aktive Verbindung eine schon bestehende aktive Verbindung zwischen der mobilen Kommunikationsvorrichtung (106) und einer oder mehreren zusätzlichen Kommunikationsvorrichtungen umfaßt;
**gekennzeichnet durch** Übermitteln einer oder mehrerer Anzeigen der Aufschattung zu der einen oder den mehreren zusätzlichen Kommunikationsvorrichtungen.

9. Verfahren nach Anspruch 8, wobei der Schritt des Durchführens der Aufschaltung, der dem ersten Benutzer erlaubt, mit dem zweiten Benutzer der mobilen Kommunikationsvorrichtung (106) zu kommunizieren, die an der schon bestehenden aktiven Verbindung beteiligt ist, folgende Schritte umfaßt:
Bestimmen, daß der erste Benutzer ein Prioritätsbenutzer ist; und
Überbrücken eines Verbindungsweges (120) des Prioritätsbenutzers mit einem Verbindungsweg (122) des zweiten Benutzers.

10. Verfahren nach Anspruch 9, weiterhin mit folgendem Schritt:
Identifizieren einer besuchten Mobilvermittlungsstelle (116), die mit der mobilen Kommunikationsvorrichtung (106) synchronisiert ist, durch Einsatz eines Heimatregisters;
wobei der Schritt des Überbrückens des Verbindungsweges (120) des Prioritätsbenutzers mit dem Verbindungsweg (122) des zweiten Benutzers den folgenden Schritt umfaßt:
Zusammenwirken mit der besuchten Mobilvermittlungsstelle (116) zum Überbrücken des Verbindungsweges (120) des Prioritätsbenutzers mit dem Verbindungsweg (122) des zweiten Benutzers.

11. Verfahren nach Anspruch 8, weiterhin mit folgendem Schritt:
Übermitteln von einer oder mehreren Anzeigen der Aufschaltung zu der mobilen Kommunikationsvorrichtung (106).

12. Verfahren nach Anspruch 8, wobei der Schritt des Bestimmens, daß der erste Benutzer der Prioritätsbenutzer ist, den folgenden Schritt umfaßt:
Empfangen einer Erstadressennachricht vom ersten Benutzer, wobei die Erstadressennachricht einen Handvermittlungsdienste-Informationsparameter als Anzeiger für einen besonderen Bearbeitungstypenwert umfaßt.

## Revendications

1. Appareil (100) comprenant un centre de commutation mobile (102) qui achemine des appels à destination et/ou en provenance d'un dispositif de communication mobile (106),
dans lequel le centre de commutation mobile (102) réalise une intervention qui permet à un premier utilisateur de communiquer avec un second utilisateur du dispositif de communication mobile (106) qui est engagé dans un appel actif préexistant, dans lequel l'appel actif préexistant comprend un appel actif préexistant entre le dispositif de communication mobile (106) et un ou plusieurs dispositifs de communication additionnels ;
**CARACTERISE EN CE QUE** :
dans lequel le composant de commutation mobile (102) communique une ou plusieurs indications de l'intervention à l'un ou plusieurs dispositifs de communication additionnels.

2. Appareil (100) selon la revendication 1, dans lequel le composant de commutation mobile (102) communique une ou plusieurs indications de l'intervention au second utilisateur du dispositif de communication mobile (106) .

3. Appareil (100) selon la revendication 1, dans lequel le composant de commutation mobile (102) réalise l'intervention pour permettre au premier utilisateur de participer à l'appel actif préexistant entre le dispositif de communication mobile (106) et l'un ou plusieurs dispositifs de communication additionnels.

4. Appareil (100) selon la revendication 1, dans lequel le composant de commutation mobile (102) reçoit un code d'autorisation du premier utilisateur ;
dans lequel le composant de commutation mobile (102) emploie le code d'autorisation du premier utilisateur pour réaliser l'intervention.

5. Appareil (100) selon la revendication 1, dans lequel le composant de commutation mobile (102) emploie une ou plusieurs désignations d'utilisateur prioritaire du second utilisateur pour réaliser une détermination que le premier utilisateur est un utilisateur prioritaire ;
dans lequel lors de la détermination que le premier utilisateur est un utilisateur prioritaire, le composant de commutation mobile (102) réalise l'intervention pour permettre à l'utilisateur prioritaire de communiquer avec le second utilisateur.

6. Appareil (100) selon la revendication 1, dans lequel le composant de commutation mobile (102) comprend un centre de commutation mobile domestique (114) pour le dispositif de communication mobile (106), dans lequel le centre de commutation mobile domestique (114) reçoit une demande pour l'intervention, l'appareil (100) comprenant en outre :
un centre de commutation mobile visité (116) pour le dispositif de communication mobile (106) ;
dans lequel le centre de commutation mobile domestique (114) identifie le centre de commutation mobile visité (116) grâce à l'emploi de l'enregistreur de localisation nominal ;
dans lequel le centre de commutation mobile domestique (114) et le centre de commutation mobile visité (116) coopèrent pour réaliser l'intervention afin de permettre au premier utilisateur de participer à l'appel actif préexistant avec le second utilisateur du dispositif de communication mobile (106).

7. Appareil selon la revendication 1, dans lequel le composant de commutation mobile reçoit un message d'adresse initiale du premier utilisateur :
dans lequel le message d'adresse initiale comprend un paramètre d'information de services d'opérateur comme un indicateur pour une valeur de type de manipulation spéciale ;
dans lequel le centre de commutation mobile emploie la valeur de type de manipulation spéciale pour réaliser l'intervention.

8. Procédé d'autorisation d'un premier utilisateur pour communiquer avec un second utilisateur d'un dispositif de communication mobile (106) comprenant l'étape de :
réalisation d'une intervention qui permet au premier utilisateur de communiquer avec le second utilisateur du dispositif de communication mobile (106) qui est engagé dans un appel actif préexistant, dans lequel l'appel actif préexistant comprend un appel actif préexistant entre le dispositif de communication mobile (106) et un ou plusieurs dispositifs de communication additionnels ;
**CARACTERISE PAR**
la communication d'une ou plusieurs indications de l'intervention à l'un ou plusieurs dispositifs de communication additionnels.

9. Procédé selon la revendication 8, dans lequel l'étape de réalisation de l'intervention qui permet au premier utilisateur de communiquer avec le second utilisateur du dispositif de communication mobile (106) qui est engagé dans l'appel actif préexistant comprend les étapes de :
détermination que le premier utilisateur est un utilisateur prioritaire ; et
mise en parallèle d'un tronçon d'appel (120) de l'utilisateur prioritaire avec un tronçon d'appel (122) du second utilisateur.

10. Procédé selon la revendication 9, comprenant en outre l'étape d' :
identification d'un centre de commutation mobile visité (116) qui est synchronisé avec le dispositif de communication mobile (106) grâce à l'emploi d'un enregistreur de localisation nominal ;
dans lequel l'étape de mise en parallèle du tronçon d'appel (120) de l'utilisateur prioritaire avec le tronçon d'appel (122) du second utilisateur comprend l'étape de :
coopération avec le centre de commutation mobile visité (116) pour mettre en parallèle le tronçon d'appel (120) de l'utilisateur prioritaire avec le tronçon d'appel (122) du second utilisateur.

11. Procédé selon la revendication 8, comprenant en outre l'étape de :
communication d'une ou plusieurs indications de l'intervention au dispositif de communication mobile (106).

12. Procédé selon la revendication 8, dans lequel l'étape de détermination que le premier utilisateur est l'utilisateur prioritaire comprend l'étape de :
réception d'un message d'adresse initiale du premier utilisateur, dans lequel le message d'adresse initiale comprend un paramètre d'information de services d'opérateur comme un indicateur pour une valeur de type de manipulation spéciale.
